# EUROPEAN PATENT APPLICATION

(11) **EP 1 422 248 A1**
(43) Date of publication of application: **26.05.2004**
(21) Application number: 03447092.2
(22) Date of filing: 15.04.2003
(51) Int. Cl.: C08F 8/32, C09D 17/00, C09D 5/02, D21H 19/22

(54) **A plastic pigment comprising an aqueous dispersion of styrene maleimine acid anhydride particles**

(30) Priority: 04.10.2002 EP 02079406
(71) Applicant: Raisio Chemicals Ltd., 21200 Raisio (FI)
(72) Inventor: Friederichs, Joseph Petronella, 6019 CC Wessem (NL); Abbeele Van Den, Henk Jan Frans, BE-3290 Schaffen-Diest (BE)
(74) Representative: Luys, Marie-José

(57) **Abstract**

This invention relates to an aqueous dispersion of a plastic pigment, the plastic pigment comprising an amount of a copolymer of maleic acid anhydride and a vinylaromatic monomer, which has been subjected to an imidisation reaction, in which at least 80 mole % of the maleic acid anhydride monomeric units of the copolymer are imidized. The maleic anhydride monomer content of the copolymer preferably ranges between 22-36 mole %, the styrene monomer content of the copolymer preferably ranges between 64-78 mole %, the maleic acid anhydride/vinylaromatic monomer copolymer having a preferred molecular weight of between 60.000-150.000 g/mole.

The invention also relates to a method for the production of this aqueous plastic pigment dispersion. The invention further relates to the use of this aqueous coating composition for coating a product to be imprinted.

## Description

The present invention relates to an aqueous dispersion of a plastic pigment, the plastic pigment comprising an amount of a copolymer of (1) maleic acid anhydride and (2) a vinylaromatic monomer, which has been subjected to an imidisation reaction, as described in the preamble of the first claim. The present invention further relates to a method for the production of such a dispersion and to an aqueous coating composition containing the plastic pigment composition.

From EP-A-1.060.197 a method is known for the production of an aqueous dispersion of a styrene maleimine copolymer, to be used as a paper sizing composition. The dispersion is applied as a top coat to a paper surface, with the aim of reducing the water-absorption properties of the paper surface and of providing good ink-jet printing properties. According to EP-A-1.060.197, the styrene maleic acid anhydride copolymer is synthesised using generally known processes. The copolymer is subjected to an imidisation reaction, by contacting it with an aqueous solution of NH₃ or an amine, at a temperature of at least 95°C and a pressure which is chosen such as to avoid boiling of the reaction mixture. The molar ratio of maleic anhydride monomer units and NH₃ or amine is selected between 1:0.8 and 1:5. The imidisation reaction is continued until a degree of imidisation of the maleic acid anhydride monomer units is obtained of at most 75%. Thereafter, the dispersion is applied to paper by means of calendaring to provide a top coat to the paper and the paper is dried. It has however been found that when printing a paper coated with the aqueous styrene maleimine copolymer dispersion disclosed in EP-A-1.060.197, the quality of the printing is insufficient. In particular, characters are printed insufficiently sharp, the delimitation of different colours is insufficient as a consequence of which colours fade into each other.

There is thus a need to a new plastic pigment composition with which an improved printing quality may be achieved.

There is further a need to a process for producing such a plastic pigment composition.

Therefore, the present invention aims at providing an aqueous plastic pigment composition for use as a top coat for paper, with which an improved printing of the paper may be achieved.

This aim is achieved with the present invention, with the technical features of the characterising part of the first claim.

The plastic pigment dispersion of this invention comprises a plastic pigment comprising an amount of a copolymer of maleic acid anhydride and vinylaromatic units, of which at least 80% mole of the maleic acid anhydride monomeric units are imidized.

Suitable vinylaromatic monomers for use in the copolymer of the present invention include readily commercially available styrene and alfa-methylstyrene, although the presence of styrene monomer units is preferred.

The inventor has found that when using a polymer dispersion in which at least 80 mole % of the maleic acid anhydride units have been imidised, a plastic pigment dispersion is obtained which, when applied as a coating to a surface, gives an improved coating. It has been found that with the present invention a plastic pigment dispersion may be obtained the particles of which have a glass transition temperature of between 160 and 205°C or even higher and an improved thermal stability and mechanical strength. As a result of the improved mechanical strength the particles are capable of withstanding deformation forces occurring in the course of the calendaring process following application of the coating to the paper surface. With respect to the calendaring process, a reduced tendency to sticking to the calender has been observed. With respect to calendaring it has further been found that the number of calender nips passages may be reduced and the pressure exerted to the paper in the calendaring process may be reduced, without this adversely effecting the paper gloss. When applying the plastic pigment dispersion of this invention to a paper or cardboard surface, a surface with an improved smoothness may be obtained, the tendency to mottling being seriously reduced. The coating has been found to consist of a plurality of small, discrete pigment particles showing improved adhesion to each other and to the surface to be coated. The inventor has further found that upon printing a paper surface coated with the plastic pigment of this invention, an improved printing quality is achieved. Swelling of the plastic pigment has been found to occur to only a very minimum extent so that the paper remains flat during off set printing as well as ink jet printing. After having been imprinted the quality of the paper is substantially maintained. When imprinted, the characters are well delimited from each other, superimposed successively applied printing layers being well delimited from each other, fading of adjacent characters and colours into each other being limited.

The observation of the improved printing quality is attributed to the fact that the coating is built up of a plurality of discrete fine particles, drainage channels being formed between the particles, the presence of these drainage channels taking care of fast removal of ink solvent or water in case use is made of a water based ink. When analysing the problems occurring with the state of the art coatings, the inventor has namely found that in the course of the calendaring process following application of the coating, the styrene maleimine copolymer particles mechanically disintegrate, flow together and form a film. Film formation has the effect that upon printing, the removal of solvent or dispersing agent for the ink is retarded and the printing quality is adversely affected. The plastic pigment dispersion coating of the present invention to the contrary shows a reduced tendency to film formation when applied as a coating. These results have been observed irrespective of whether the plastic pigment was applied to the paper as a size press or film press, or by means of the usual blade coating device.

Preferably however, imidisation is continued until at least 90 mole %, more preferably 95 mole % or even virtually all of the maleic acid anhydride monomeric units are imidized. By controlling the degree of imidisation, the surface tension of the coating can be controlled, which allows adapting the properties of the coating to the envisaged end use.

In view of obtaining a copolymer with a sufficiently high molecular weight and thus a dispersion 35-60% with a sufficiently high solid state content, preferably use is made of a copolymer in which the maleic anhydride monomer content ranges between 1-99 mole %, preferably between 15 and 50 mole %, more preferably between 20-40 mole %, most preferably 20-36 mole %. The inventor has found that the emulsion may be precipitated and dried, and handled as a dry solid. The dry solid may be re-dispersed in water with a low amount of some dispersing agent, the re-dispersed product having virtually the same particle size as the original one.

The styrene monomer content of the copolymer preferably ranges between 99-1 mole %, preferably between 80 and 50 mole %, more preferably between 60 and 80 mole %, most preferably 64-80 mole %.

With this type of copolymers a dispersion may be obtained the maleic acid anhydride/vinylaromatic monomer copolymer particles of which have a molecular weight within the preferred molecular weight ranges described below. The maleic acid anhydride content of 20 - 40 mole % and 22-36 mole % are particularly preferred as in these ranges the copolymer shows optimum water solubility, giving optimum imidisation yield and high solid state content of the dispersion resulting from the imidisation. The inventor has found that the maleic acid anhydride content further determines the particle size, the particle size increasing with increasing maleic acid anhydride content, as well as the hardness of the copolymer, the copolymer being softer and more formable in the course of the imidisation reaction the higher the maleic acid anhydride content is. This means in fact that the shape of the copolymer particles after imidisation is determined by the physical conditions prevailing in the imidisation reaction, e.g. concentration and agitation of the particles.

The aqueous plastic pigment dispersion of this invention preferably has a solid content of more than 35 wt. %, even more than 50 or more than 60 wt. % associated with a low viscosity. The polymer dispersion has been found to consist of discrete particles having a particle diameter above 30 nm, sometimes above 40 or 50 nm, but smaller than 400 nm, often smaller than 250 or even below 120 and 100 nm, the particle size distribution being narrow, often virtually mono-disperse, the particles being virtually spherical which favours the packing density. As the diameter of the particles is smaller than the wavelength of visible light, a smooth, high gloss and transparent coating may be obtained in which the individual particles are invisible even after drying of the coating. By controlling the particle size preference may be given to a coating with a larger or lesser gloss, being more transparent or showing some opaqueness. The formation of small particles further entails the advantage that the use of an emulsifier to stabilise the dispersion can be dispensed with. This in contrast to a dispersion containing larger particles which needs the presence of an emulsifier to attain in a stable dispersion.

The present invention also relates to a process for the production of the above described aqueous plastic pigment dispersion. According to this process an aqueous dispersion of a copolymer of maleic acid anhydride and a vinylaromatic monomer is prepared by
1) dissolving a starting copolymer of maleic acid anhydride and a vinylaromatic monomer in an aqueous solution of NH₃ or an amine RNH₂,
2) subjecting the thus obtained reaction mixture to an imidisation reaction until at least 80 mole % of the maleic acid anhydride monomer units have been imidised.

To obtain a dispersion the particles of which have a Tg that is as high as possible, the imidisation reaction is preferably continued until at least 90 mole %, or even virtually all maleic acid anhydride monomer units have been imidised.

A copolymer containing monomeric vinylaromatic units and monomeric maleic acid anhydride may be synthesised according to processes well known to the man skilled in the art, such as for example the process described in Hanson and Zimmerman, Ind. Eng. Chem. Vol. 49, nr. 11 (1957), p. 1803-1807.

In the method of this invention, the starting copolymer is dissoved in water, an emulsifier optionally being present. To this solution an aqueous solution of NH₃ or an amine R-NH₂ is added, in which R may be an alkyl group having between 1-18 carbon atoms or an aryl group. It is however preferred to use NH₃, although butylamine and stearylamine also appeared to be suitable imidisation reactants.

It is preferred to keep the excess of NH₃/RNH₂ in the course of the imidisaton reaction as low as possible. To minimise the unnecessary loss of chemicals it is preferred that the molar ratio between the amine or NH₃ and the copolymer to be imidised ranges between 1.2-1, but is preferably an equimolar ratio or even less. In the course of the imidsation reaction NH₃ is released, which may be re-used in the imidisation. It is preferred to control the dosing of NH₃/RNH₂ such that the released NH₃ is virtually fully re-used in the imidisation reaction.

The amount of NH₃ added is preferably chosen such that the upper limit of the molar ratio of NH₃/maleic acid anhydride present in the copolymer to be subjected to imidisation is 10:1, preferably 5:1. The lower limit is preferably 1:1, more preferably 0.5:1.

If so desired, the imidisation reaction may be carried out in the presence of a vinylaromatic maleimine acid anhydride copolymer or an alkali salt thereof, this maleimine copolymer having a maleic acid content of at least 30 mole %. The alkali salt may function as an emulsifying agent.

The maleic acid anhydride/vinylaromatic monomer copolymer has a molecular weight which preferably is not too high and neither too low so as to allow obtaining a dispersion with a sufficiently high solid state content. In the present invention, the maleic acid anhydride/vinylaromatic monomer copolymer has a molecular weight which is at least 1000-g/mole, preferably at least 15.000 g/mole, more preferably at least 60.000 g/mole. The molecular weigh of this copolymer is preferably less than 500.000, 300.000, more preferably less than 200.000 g/mole or less than 150.000 g/mole. Ideally, the molecular weight of the starting copolymer is between approximately 50.000 and 80.000 g/mole as it allows obtaining a so-called monodisperse dispersion with a narrow particle size distribution of between 50 and 100 nm, the mean particle diameter being approximately 70 nm. Ultimately such a dispersion is stable, even in absence of an emulsifier, and allows obtaining a coating with an optimum gloss.

If so desired, the maleic acid anhydride/vinylaromatic monomer copolymer used may be a copolymer composition comprising a plurality of copolymers having varying molecular weights. This function may be fulfilled by the emulsifier. The molecular weight of the copolymer after imidisation has been found to be a key parameter when processing it.

A too high molecular weight of the copolymer involves the risk that the viscosity of the dispersion becomes too high and the solid state content too low. A too low molecular weight of the copolymer involves the risk that the solid state content of the dispersion gets too high, which has an adverse effect on the applicability of the dispersion. A too low molecular weight of the copolymer involves the additional risk to intra-particle adhesion and agglomeration, due to Vander Waals attraction between the particles, involving entanglement and the formation of particles with too large dimensions.

In the method of this invention, the imidisation reaction will mostly be carried out at a temperature above 100°C, preferably between 120-195°C, more preferably at a temperature between 160-175°C. Below 100°C insufficient imidisation has been observed, imidisation was found to be economically unfeasible. At a temperature above 170°C and in particular above 195°C, there is an increasing risk to melting of the polymer, as a consequence of which particle formation in the dispersion is counteracted, giving particles with a too large size which are visible when applied as a coating and easily involve film formation. Within the claimed temperature ranges, the imidisation reaction is favoured over the formation of an imine-amine compound. The temperature range of 160-175°C is preferred as within this range a well defined dispersion with respect to Tg and mechanical properties and composition is obtained and the process showing good reproducibility. The inventor observed that, independently of the size of the reactor, the reaction mixture showed a strong viscosity drop approximately 30 minutes after the centre of the reaction mixture reaches a temperature of 150°C, the dropping viscosity indicating that imidisation is advancing.

In the course of the imidisation reaction, the pressure is adapted such that the risk to boiling of the reaction mixture and foam formation are minimised.

Also, within the claimed temperature ranges sufficient imidisation can be obtained within an economically feasible reaction time, at a pressure which is not too high, e.g. approximately 7 bar. The risk to formation of imine-amine compounds should be minimised as these compounds have a lower glass transition temperature Tg, thus giving rise to particles which are liable to deformation in the course of a calendaring process.

To minimise adhesion of the reaction mixture to the reactor wall in the course of the imidisation reaction, the reaction mixture is stirred. The inventor has namely found that after the aqueous solution of the copolymer has been contacted with ammonia or the amine, in the course of the imidisation reaction a gel phase is formed, which may be broken or cut through stirring, adhesion to the reactor wall thereby being minimised. This cutting action assists in shaping the particles of the dispersion formed following imidisation.

The rotation speed applied upon stirring of the reaction mixture and the time during which the reaction mixture is stirred, will be in general adapted by the man skilled in the art. Adapting this parameter allow controlling the physical properties and particle size of the dispersion obtained, i.e. allows controlling whether small particles with a smooth surface are formed which ultimately give a coating with a high gloss and good transparency, or larger particles if a more opaque coating is aimed at. Stirring assists in avoiding the formation of particles with a rough surface and non-uniform shape which, when applied as a coating would give undesired scattering. The inventors have namely found that the more uniform the shape of the particles, the better the gloss of the coating and the better the drainage properties of the coating when imprinted. The inventors have found that the shape of the particles is determined by centrifugal forces prevailing in the course of the imidisation reaction, and a.o. by the time the reaction mixture is stirred.

With the present invention no anti-formaing agent, betere dispersie without anti foaming is emulgator If so required, the imidisation reaction may be carried out in the presence of an anti-foaming agent.

With the above described production process, an aqueous dispersion of the imidised plastic pigment may be obtained with the above described solid content and particle size.

When applied to a surface on top of one or more already existing coatings, due to their small size, the particles of the dispersion of this invention are capable of filling gaps left in the already applied coating. In that way a surface may be obtained which is covered by an optimum coating, providing optimum drainage properties that are hardly disturbed by the underlying coatings.

As the size of the individual particles is relatively small, a dense packing of the particles is obtained when the dispersion is applied to a surface to be coated, and dried. The small size of the particles facilitates solvent release and drying of the coating, thus minimising the risk to crack formation upon drying of the coating and improving drying time of the coating. The formation of small pigment particles further has the advantage that inter-particle attraction is governed by Van der Waals forces, giving strong inter-particle adhesion and good adhesion to the surface to be coated. Due to the dense packing, a closed top coating is achieved which when imprinted shows good drainage properties thus providing quick drying of the ink, even after for example a coated paper has been subjected to a calendaring process. This is attributed to the formation of drainage channels upon drying of the coating. The dense coating assists in minimising penetration of ink particles to underlying coatings, as a consequence of which the sharpness and fineness with which the coated material is imprinted, thus the over-all printing quality, is improved as compared to prior art coatings. Furthermore, tearing of paper coated with the coating composition of this invention and the occurrence of wet pick has been observed only to a minimum extent.

The inventor has further found that with the method of this invention, the imidised pigment particles obtained are microporous. As the dimensions of the micropores are small, penetration of ink particles into the pigment particles is inhibited, as a consequence of which the printing quality of a surface coated with a coating containing the dispersion of this invention, is further improved.

The present invention further relates to a coating composition for a surface to be coated, the coating composition comprising an amount of the aqueous plastic pigment dispersion of this invention. The amount of plastic pigment incorporated may vary within wide ranges and will mostly be determined by the application. In case of cheap paper applications, low amounts of plastic pigments will be used so as to obtain a low density coating. When using a dispersion with a high concentration of plastic pigment, either a more dense coating may be obtained, or the amount of dispersion used may be decreased.

The coating composition may further comprise the usual ingredients such as a binder, a synergy of the plastic pigment with various binders being observed, silica, which may be partly substituted by the plastic pigment dispersion of this invention if so desired. The coating composition may further contain a thickening agent, e.g. pyrrolidone which is reactive with imide compounds giving good thickening. Highbranes such as those disclosed in WO0248459 may be added to control or decrease the viscosity of the coating composition.

It has been found in practise that the aqueous dispersion of the plastic pigment of the present invention is a suitable coating material for a wide variety of surfaces that are to be imprinted. For example, the aqueous dispersion of this invention appears suitable for coating paper, a plastic film - for example a polyethylene film -, a metal foil, a textile sheet, a carton sheet, etc. When coated with a coating comprising the aqueous plastic pigment dispersion of this invention, an increased gloss of coated paper of 5-10 points after calendaring has been observed. This gloss improvement may be further increased by using a coating which exclusively consists of the dispersion of this invention.

The extent to which the maleic acid anhydride/vinylaromatic monomer has been imidised determines the acidity of the imidised copolymer. Controlling the pH allows controlling foam formation in the course of the coating process. This is an advantage as compared to known coating compositions as they often contain calcium carbonate showing superfluous foaming. The dispersion of this invention has been found to have a pH from neutral to slightly acid.

The present invention also relates to the use of the plastic pigment of this invention for the production of high gloss fine paper, light weight coated paper (LWC), mid weight coated paper and high weight coated paper, card board, thermal paper and ink jet paper, and as wet end component.

The invention is further elucidated in the accompanying figures and examples and description thereof.

Figure 1 and 2 respectively show the electric power needed to drive the stirrer as a function of the reaction time in the course of the imidisation reaction of example 3 and 4.

Figure 3 and 4 show a SEM analysis of paper coated with respectively Nanotope 26 and 34 (example 6).

Figure 5 shows a SEM analysis of paper coated with the reference coating of comparative example C.

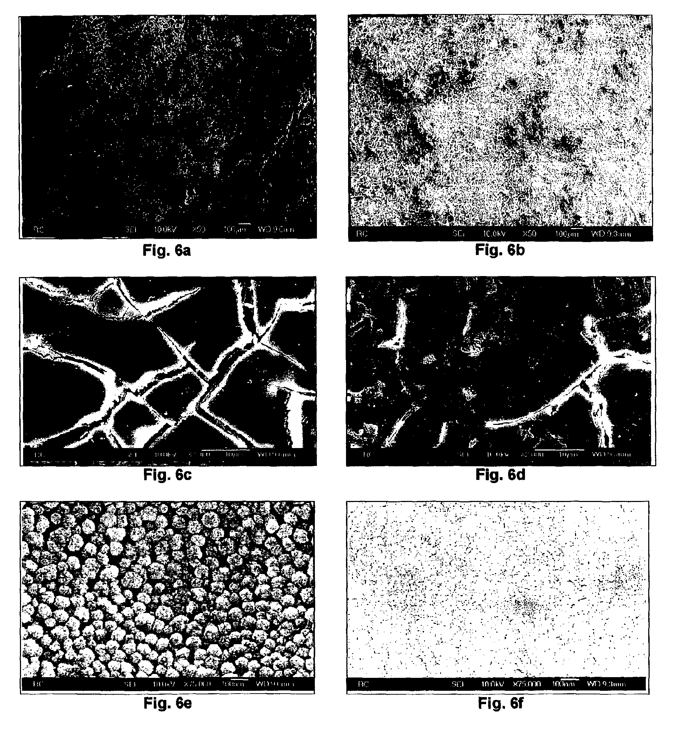

Figure 6a, c and e shows a SEM analysis of wood free base paper of 76 m²/g coated with 5 g/m² Nanotope 26, before calendaring at different enlargements. Figure 6b, d and f show the same coated paper, but after calendaring.

### EXAMPLES AND COMPARATIVE EXAMPLES.

### Characterisation methods.

### PCS measurements.

The average hydrodynamic radius of the particles of the dispersion after imidsation was determined using Photon Correlation Spectroscopy. Measurements were carried out using an ALV Laser of the Vertriebsgesellschaft mbH, Langen, Germany.

To determine the average hydrodynamic radius use was made of a Coherent Innova 90 ion arglon laser, in particular the blue line at 488 nm, at a power of 50 mW. The signal was detected with a photon multiplier of Thorn-Ermi, mounted to an ALV/SP -86#053 laser goniometer. The voltage fed to the photon multiplier was approximately 1700 V, measurements were carried out at an angle of 90°.

The detected signal was processed with an ALV 5000 Multiple Tau digital correlator provided with the ALV5000/E for Windows software. To process the measurements use was made of cumulant analysis. The hydrodynamic radius was determined from the diffusion coefficient.

To perform the PCS measurement, a sample of a dispersion obtained with the claimed method, was diluted in demineralised water, which previously had been filtered over a filter having pores with a diameter of 0.2 µm. The thus obtained sample was diluted 500 times to a solid state content of approximately 0.04 wt.% or less. The samples obtained in the comparative examples were diluted to a solid state content of approximately 0.4 wt. %.

The cell used to perform the measurements was rinsed with dust free water, followed by three rinsing cycles with the sample to be measured. It was observed that a plurality of the samples of the comparative examples were not stable in water. To stabilise these samples, an amount of buffer of pH 9 ± 0.02 (Titrisol Merck) or an aqueous NaOH solution of 10⁻³ M was added.

### Solid state content.

The solid state content was determined using an infrared dry/weigh instrument, type Mettler LP16/PM600. In case any non-reacted copolymer remained after the imidisation reaction, this copolymer was filtered over a paper filter MN640m (medium retention and filtration speed of Machery-Nagel, Germany) before determining the solid state content. If necessary, the dispersion was previously filtered over a 250 µm metal sieve. The solid state content of the resulting clear filtrate was then measured, according to the method well known to the man skilled in the art.

### PH measurements.

The pH value of each sample was measured with a Knick 752 Cl, nr. 051489 pH measurement instrument. The instrument was equipped with a loas electrod (3M KCl) and was calibrated at 20°C using buffer solutions having a pH of respectively 4.00 (citrate/HCl buffer), 7.00 and 9.00 from Merck. The pH of the samples was measured at 20°C. Samples of the comparative examples were, in case the solid state content and the viscosity were higher, diluted to a solid state content of approximately 10 wt. %. Dispersions were not diluted.

### Determining the degree of imidisation.

The degree of imidisation may for example be determined with Raman FTIR spectroscopy, by correlating the absorption intensity to the intensity of the absorption at the same wavelength of a completely imidised and a non-imidised reference sample. Before carrying out any calculations, the Raman-FTIR signals were normalised based on the absorption signals originating from the aromatic rings in the polymer chains. The calculations were based ont eh following absortptions:
-C=O imide absorption band, relatively intense signal at approximately 1768 cm⁻¹
-C=O anhydride absorption band, at approximately 1860 cm⁻¹
-C=O relatively weak absorption band of carboxylic acid groups, at approximately 1715 cm⁻¹.
As a reference use was made of (1) an aqueous ammonia solution of an imide free polymer, prepared starting from 26 mole % of maleic acid anhydride (MAA) and 74 mole % of styrene, a NH₃/maleic acid anhydride ratio of 3:1, at 50°C; (2) a SMA powder that had been subjected to an imidisation reaction by mixing 2 g of SMA (28 wt. % of MAA, 72 wt. % of styrene; molecular weight 110.000 g/mole) with 0.50 g of ureum in a double vice mini extruder, at 240°C for 5 minutes at a rotation speed of 100 rpm.

### Contact angle measurements.

Contact angles were measured with a contact angle meter type Digidrop, GBX, Roman, France. To the sample, 0.5 mg of water was applied and the contact angle was measured based on a film of 250 images/s.

### Example 1.

140 g ground SMA was dissolved in water in a double walled, oil heated reactor of 1 I, which contained a stirrer. The SMA had a MAA content of 26 mole % and a molecular weight of 80.000 g/mole. To this solution a 25% NH₃ solution was added, so that the MAA:NH₃ ratio was 1:1. Furthermore, a potassium salt of a SMA polymer was added having a molecular weight of 1000 g/mole and a MZA content of 48 mole %. The K salt:SMA ratio was 0.03:1. Water was added until a total volume of 700 ml was obtained. The pressure was adjusted to 0.2 Mpa with nitrogen.

Following increasing the temperature to 160 °C, at a rotation speed of 800 rpm, the pressure raised to 0.8 MPa. After 6 hours of reaction time a polymer dispersion was obtained having a solid state content of approximately 20 wt. %, the particle size being between 80 and 120 nm. The MAA had been completely converted to imide. The Tg of the polymer after completion of the imidisation was found to be between 190 and 200°C. The dispersion had a pH of 6.8. The contact angle of the dispersion when applied to paper was found to be smaller than 40°.

### Example 2.

245 g ground SMA was dissolved in water in a double walled, oil heated reactor of 1 I, which contained a stirrer, to which 0.2 g of Surfinol of Air Products was added.

The SMA had a MAA content of 26 mole % and a molecular weight of 80.000 g/mole. To this solution a 25% NH₃ solution was added, so that the MAA:NH₃ ratio was 1:1. Furthermore, a potassium salt of a SMA polymer was added having a molecular weight of 1000 g/mole and a MZA content of 48 mole %. The K salt:SMA ratio was 0.03:1. Water was added until a total volume of 700 ml was obtained.

Following increasing the temperature to 160 °C, at a rotation speed of 800 rpm, the pressure raised to 0.6 MPa. After 6 hours of reaction time a polymer dispersion was obtained having a solid state content of approximately 35 wt. %, the particle size being between 80 and 120 nm. The MAA had been completely converted to imide. The Tg of the polymer after completion of the imidisation was found to be between 190 and 200°C. The dispersion had a pH of 6.9. Upon drying of the coating no film formation was observed. The contact angle of the dispersion when applied to paper was found to be smaller than 40°.

### Comparative example A.

A dispersion was prepared by adding to an autoclave, 3 kg of SMA was dissolved in water in a double walled, oil heated reactor of 1 I, which contained a stirrer, to which 0.2 g of Surfinol of Air Products was added.

The SMA had a MAA content of 26 mole % and a molecular weight of 80.000 g/mole. To this solution a 25% NH₃ solution was added, so that the MAA:NH₃ ratio was 1:1. Furthermore, a potassium salt of a SMA polymer was added having a molecular weight of 1000 g/mole and a MZA content of 48 mole %. The K salt:SMA ratio was 0.03:1. Water was added until a total volume of 700 ml was obtained.

Following increasing the temperature to 160 °C, at a rotation speed of 800 rpm, the pressure raised to 0.6 MPa. After 6 hours of reaction time a polymer dispersion was obtained having a solid state content of approximately 35 wt. %, the particle size being between 80 and 120 nm. The MAA had been completely converted to imide. The Tg of the polymer after completion of the imidisation was found to be between 190 and 200°C. The dispersion had a pH of 6.9. Upon drying of the coating no film formation was observed.

### Example 3.

An experiment was carried out on pilot scale, by dissolving 60 kg of ground SMA type Stapron 28110 (DSM, The Netherlands) in 99 kg of water in a pilot reactor at room temperature, to which 0.02 kg of Topinol C of Topchim as an de-aeration agent was added. The SMA had a MAA content of 28 mole % and a molecular weight of 110.000 g/mole.

To this solution 11.70 kg of a 25% NH₃ solution in water was added, so that the MAA:NH₃ ratio was 1:1. When admitting the NH₃ solution, the temperature was increased to approximately 78°C. The reactor was further heated until the reaction mixture had a temperature of approximately 155°C.

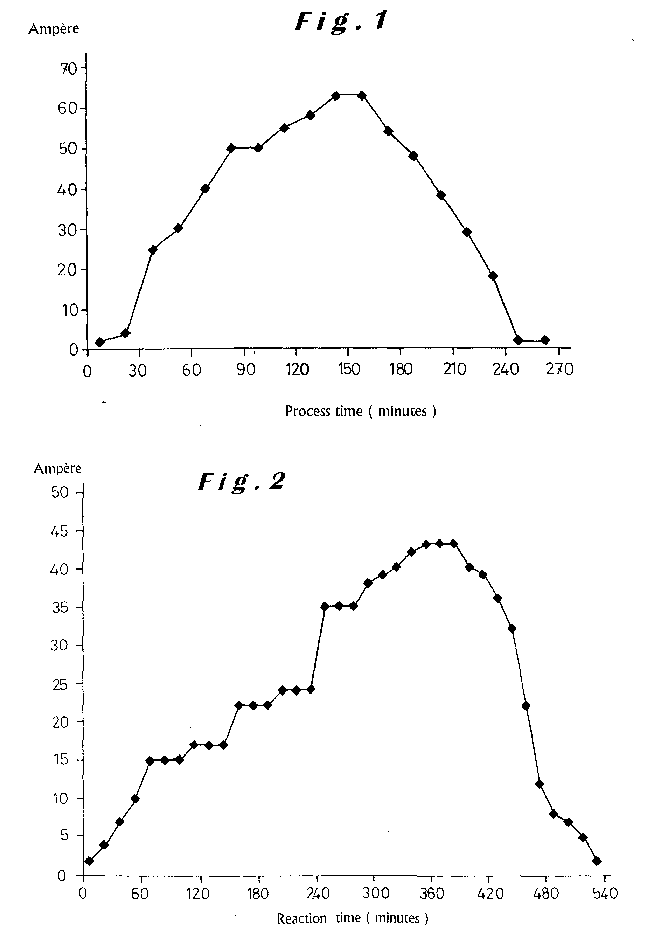

In the course of the reaction, the reaction mixture was stirred using a motor of 35 kW with a reduction of 56. The viscosity of the reaction mixture was measured by measuring the electric current needed to stir the reaction mixture at a pre-determined stirring speed. The electric power needed to drive the stirrer was recorded as a function of time. The results are summarised in table 1 and figure 1.

It was observed that as soon as the reaction mixture obtained a temperature of approximately 134°C, the viscosity increased significantly and a first gel was formed, indicating that the imidisation reaction was started by formation of the amide compounds. Thirty minutes after the centre of the reaction mixture had reached a temperature of 150°C, the reaction mixture showed a strong viscosity drop. When continuing the reaction, the reaction mixture became visco-elastic, indicating the formation of the imide was taking place. Formation of SMI particles was observed after a reaction time of approximately 210 minutes, at the moment a significant decreasing viscosity was observed. It was further observed that as soon the pH of the reaction mixture obtained a value of approximately 7, the imidisation was complete.

After a reaction time of approximately 4 h and 15 min, heating was stopped and the reaction mixture was cooled down to room temperature.

A dispersion of SMI in water was obtained having a solids content of 40 wt. %, a pH of 7, a mean particle diameter of 86 nm.

### Example 4.

The procedure of example 3 was repeated, this time dissolving 1400 kg of ground SMA type Stapron 26080 (DSM, The Netherlands) in 2352 kg of water in a pilot reactor at room temperature, to which 0.05 kg of Topinol C was added, although this can be dispensed with. The SMA had a MAA content of 26 mole % and a molecular weight of 80.000 g/mole.

To this solution 249 kg of a 25% NH₃ solution in water was added, so that the MAA:NH₃ ratio was 1:1. When admitting the NH₃ solution, the temperature was increased to approximately 86°C. The reactor was further heated until the reaction mixture had a temperature of approximately 150°C. The electric power needed to drive the stirrer stirring the reaction mixture was recorded as a function of time. The results are summarised in table 2 and figure 2.

It was observed that as soon as the reaction mixture obtained a temperature of approximately 101°C, the viscosity increased significantly and a first gel was formed, indicating that the imidisation reaction was started by formation of the amide compounds. When continuing the reaction, the reaction mixture became visco-elastic, indicating the formation of the imide was taking place. Formation of SMI particles was observed after a reaction time of approximately 5 hours, at the moment a decreasing viscosity was observed. It was further observed that as soon the pH of the reaction mixture obtained a value of approximately 7, the imidisation was complete.

After a reaction time of approximately 6 h and 45 min, heating was stopped and the reaction mixture was cooled down to room temperature.

A dispersion of SMI in water was obtained having a solids content of 40 wt. %, a pH of 7, a mean particle diameter of 72 nm.

The inventor has found that the stronger the gel phase and the higher the visco-elasticity of the reaction mixture in the course of the imidisation reaction, the smaller the particles. Studying of the course of the experiments learned that increasing the MAA content or molecular weight of the starting polymer leads to a decreasing heat transport within the reaction mixture, and thus a longer reaction time in the central part of the reactor. Studying the course of the experiments also learned that the time needed to form the dispersion after having reached the temperature of 150°C at which the imidisation reaction is carried out, increases with increasing maleic acid anhydride content of the starting polymer.

### Example 5.

Each of the felt and wire side of wood free paper of 76 g/m² were coated in an on-line film press at a speed of 1300 m/min, with 4.5 g of a dry sizing. Thereafter, a base sizing was applied having a solids content of 59 wt. % and consisting of pigmented latex, starch and 75 parts of calcium carbonate. On top of the base coating, an off line mid coat was applied having the same composition as the base coating, however with a solids content of 64 wt. %.

The thus pre-treated paper was coated with a top coating and passed through a calendaring device having 9 successive nip passages, at a pressure of 220N/m at each nip. The top coating had the following composition: 75 parts of CaCO₃, 25 parts of kaolin, 14 parts of latex, the usual additives and 10 parts of the plastic pigment dispersion of this invention, the properties of which are given in table 3 below.

### Comparative example B.

The experiment of example 5 was repeated, however this time using as a top coat a reference coating containing 75 parts of CaCO₃, 25 parts of kaolin, 14 parts of latex and the usual additives. The reference coating did not contain the plastic pigment dispersion of this invention. The top coat was applied. Thereafter the paper was passed through a calendaring device having 11 successive nip passages, at a pressure of 280N/m at each nip.

The thus obtained paper had a weight of 115 g/m².

**Table 3.**

| Dispersion | Mean particle Diameter (nm) | Molecular weight | Mole % of MAA in starting polymer | Gloss Wire side | Loss felt side |
|---|---|---|---|---|---|
| Nanotop 26 | 70 | 80 000 | 26 | 76 | 78 |
| Nanotop 28 | 95 | 80 000 | 28 | 74 | 75 |
| Nanotop 33 | 1500 | 5 000 | 33 | 56 | 58 |
| Nanotop 34 | 130 | 80 000 | 34 | 73 | 74 |
| Comp. Ex. B | | | | 74.5 | 76 |

From the comparison of the results of example 5 with the comparative example it becomes clear that with the plastic pigment dispersion of this invention a similar gloss can be obtained, although smaller amount of top coat has been applied and that the plastic pigment has high coverage properties. The fact that a smaller amount of top coat has been applied becomes apparent from the fact that in the examples the top coat has been applied using only 9 nips, whereas in the comparative example 11 nips needed to be used.

It was further observed that the paper obtained according to this invention was thicker and had higher Schot values as compared to the paper obtained with the comparative example. This is attributed to the fact that with the invention the number of nips required in the calendaring process may be reduced, as a consequence of which the paper strength is less affected during calendaring and a high initial gloss may be obtained.

### Example 6.

Example 5 was repeated and each of the felt (TS) and wire side (BS) pretreated as disclosed in example 5, were coated on top of the off line mid coat with a plastic pigment composition of this invention respectively Nanotope 26 and Nanotope 34. The pre-treated paper was coated with a top coating. Thereafter the paper was passed through a calendaring device having 9 successive nip passages, at a pressure of 230N/m at each nip. The top coating had the following composition: 63 parts of CaCO₃, 27 parts of kaolin, 10 parts of either Nanotope 26 or 34. The top coating contained the other usual additives. The properties of the thus obtained paper are given in table 4 below. The tests were carried out using a total amount of 20 tons of paper.

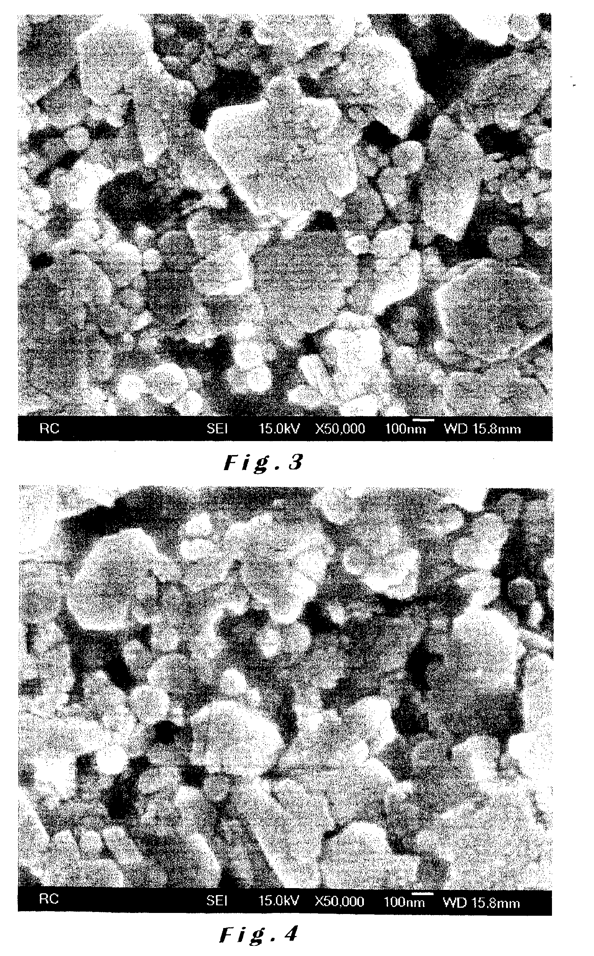

SEM analysis of the paper coated with Nanotope 26 and 34 are shown in figures 3 and 4 respectively.

Nanotope 26 and 34 refer to dispersions respectively based on a starting SMA copolymer comprising 26 and 34 mole % of MAA. Virtually all MAA units had been imidised. Nanotope 26 had a mean particle diameter of 69 nm and a Tg of 185°C. Nanotope 34 had a mean particle diameter of 923 nm and a Tg of 205°C.

SEM analysis of the paper surface coated with Nanotope 26 and 34 are shown respectively in figure 3 and 4.

### Comparative example C.

The experiment of example 4 was repeated, this time however with a paper to which a top coat was applied containing 70 parts of CaCO₃, 30 parts of kaolin, 12 parts of latex.

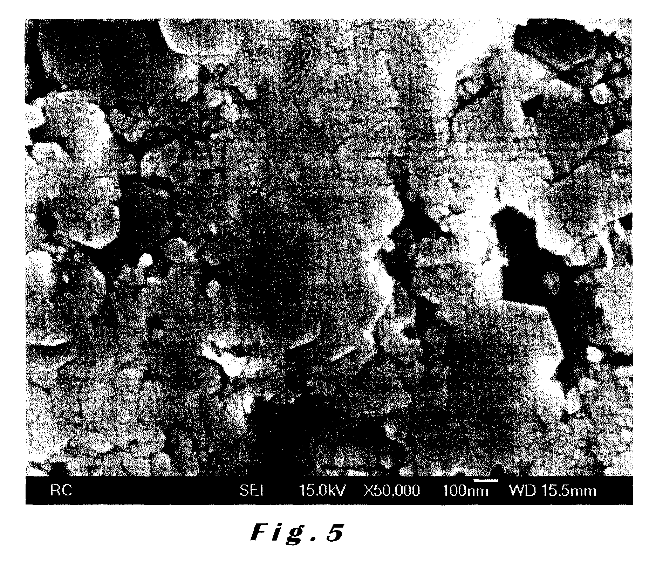

A SEM analysis of the paper coated with this reference coating is shown in figure 5.

**Table 4.**

| Sample | Number of nips | Pressure N/m | TS Gloss before | TS Gloss after | BS Gloss before | BS Gloss after | Heliotest (*) |
|---|---|---|---|---|---|---|---|
| Reference | 11 | 320 | 44 | 74 | 45 | 75 | 22 mm |
| Nanotope 26 | 9 | 230 | 44 | 75 | 47.1 | 77 | 40 mm |
| Nanotope 34 | 9 | 230 | 45.5 | 74.3 | 44.9 | 75.7 | 57 mm |

| | | | | | | | |
|---|---|---|---|---|---|---|---|
| (*) distance over which 100 missing dots were observed in the heliotest | | | | | | | |

When comparing the results of Example 6 with Comparative Example C, it becomes apparent that by using the top coat of the present invention due to its high coverage properties, a paper with the same gloss may be obtained at a smaller amount of coating applied. The smaller amount of coating becomes apparent from the fact that with the invention calendaring is carried out at only 9 nips, whereas according to the state of the art calendaring at 11 nips is required to achieve the same gloss.

When using the same number of nips and the same pressure at each nip, a coated paper with a higher gloss was obtained. It was further found that in the heliotest the number of missing dots per length unit of printed paper length could be significantly decreased with the paper coated with the plastic pigment dispersion of this invention.

From the SEM analysis shown in figure 5 it can be seen that the paper coated with the reference top coating shows a large number of small cracks, as well as larger craters which penetrate deeper into the paper surface. The presence of the small cracks has the consequence that the paper surface has a bad ink retention and that ink is capable of penetrating into the bulk paper in the course of a printing process. Absorption of ink into the bulk of the paper not only involves that more ink is needed to achieve a good printing intensity, but also that the sharpness of the printing process is adversely affected.

In the surface of the paper coated with Nanotope 26 and 34 topcoat respectively shown in figure 3 and 4 to the contrary the number of small surface cracks is significantly lower, in the Nanotope 34 topcoat virtually absent. Furthermore, the surface contains a large number of spherical particles of the top coat plastic pigment dispersion. This is attributed to the fact that the coating shows a good water retention, as a consequence of which penetration of the coating into the bulk paper takes place to a negligible extent and less coating is needed to coat the paper surface. Also, the paper surface is virtually free of the small cracks. Apparently through the presence of the top coat, the formation of larger craters on the paper surface may be suppressed. The better density of the paper surface and the presence of channels between the top coat particles has the consequence that the ink retention is improved, drainage of ink solvent is improved and that the ability of the ink of penetrating into the bulk paper in the course of a printing process is reduced. As a consequence, the amount of ink needed to achieve a good printing intensity may be decreased, and the sharpness of the printing process improved.

**Table 2.**

| Reaction Time (min) | Treaction mixture (°C) | Electric power (Ampère) | Rpm | Pressure (bar) | Observations |
|---|---|---|---|---|---|
| 0 | 23 | 2 | 50 | 0.50 | Introduction of H2O |
| 15 | 75 | 4 | 35 | 0.50 | Introduction of Stapron 26080* |
| 60 | 86 | 7 | 37 | 0.70 | Closing of the reactor and Introduction of NH4 |
| 75 | 101 | 10 | 46 | 1.00 | Start of increase of viscosity |
| 90 | 108 | 15 | 50 | 1.10 | Strong viscosity increase |
| 105 | 114 | 15 | 50 | 1.15 | Idem |
| 120 | 116 | 15 | 50 | 1.15 | Idem |
| 135 | 118 | 17 | 50 | 1.80 | Idem |
| 150 | 122 | 17 | 50 | 2.00 | Idem |
| 165 | 124 | 17 | 50 | 2.00 | Increase of visco elasticity |
| 180 | 127 | 22 | 50 | 2.70 | Decrease of vortex |
| 195 | 131 | 22 | 50 | 3.00 | High gloss and jelly aspect |
| 210 | 135 | 22 | 50 | 3.30 | Slow movement of gel phase in the reactor |
| 225 | 137 | 24 | 50 | 3.40 | No vortex |
| 240 | 138 | 24 | 50 | 3.40 | No vortex |
| 255 | 140 | 24 | 50 | 3.50 | No vortex |
| 270 | 141 | 35 | 50 | 3.70 | No vortex |
| 285 | 142 | 35 | 50 | 3.80 | Forming of chewing gum bubbles |
| 300 | 144 | 35 | 50 | 3.80 | Idem |
| 315 | 145 | 38 | 50 | 3.80 | Idem |
| 330 | 146 | 39 | 50 | 3.80 | Idem |
| 345 | 147 | 40 | 50 | 3.80 | Idem |
| 360 | 149 | 42 | 50 | 4.00 | Very high shear resistance |
| 375 | 150 | 43 | 50 | 5.00 | Maximum sheer resistance |
| 390 | 150 | 43 | 50 | 5.00 | Maximum sheer resistance |
| 405 | 149 | 43 | 50 | 5.00 | Maximum sheer resistance |
| 420 | 149 | 40 | 50 | 5.00 | Viscosity decrease |
| 435 | 150 | 39 | 50 | 5.00 | Viscosity decrease |
| 450 | 150 | 36 | 50 | 5.00 | Light foam and vortex forming |
| 465 | 153 | 32 | 25 | 5.00 | Strong foam forming |
| 480 | 154 | 22 | 25 | 6.00 | Manuel addition of +1 bar pressure |
| 495 | 154 | 12 | 25 | 6.00 | Decrease of foam forming till 6 bar |
| 510 | 155 | 8 | 25 | 6.00 | Low viscosity and minimum foam |
| 525 | 155 | 7 | 25 | 6.00 | Stop the heating and start cooling |
| 540 | 100 | 5 | 25 | 6.00 | Less foam and viscosity like water |
| 555 | 40 | 2 | 25 | 6.00 | Homogeneous mixture - end of process |

## Claims

1. An aqueous dispersion of a plastic pigment, the plastic pigment comprising an amount of a copolymer of maleic acid anhydride and a vinylaromatic monomer, which has been subjected to an imidisation reaction, **characterised in that** at least 80 mole % of the maleic acid anhydride monomeric units of the copolymer are imidized.

2. An aqueous dispersion as claimed in claim 1, **characterised in that** the maleic anhydride monomer content of the copolymer ranges between 1-99 mole %, preferably 22-36 mole % and the styrene monomer content of the copolymer ranges between 99-1 mole %, preferably 64-78 mole %.

3. An aqueous dispersion as claimed in claims 1 or 2, **characterised in that** the maleic acid anhydride/vinylaromatic monomer copolymer has a molecular weight ranging between 1000-500.000 g/mole, preferably between 10.000-300.000 g/mole, more preferably between 60.000-150.000 g/mole.

4. An aqueous dispersion as claimed in any one of claims 1-3, **characterised in that** the maleic acid anhydride/vinylaromatic monomer copolymer is a copolymer composition comprising a plurality of copolymers having varying molecular weights.

5. An aqueous dispersion as claimed in any one of claims 1-4, **characterised in that** the dispersion has a solid content of more than 40 wt. %, preferably more than 50 wt. %, more preferably more than 60 wt. %.

6. An aqueous dispersion as claimed in any one of claims 1-5, **characterised in that** the polymer dispersion consists of discrete particles having a particle size between approximately 30-400 nm, preferably between 30-120 nm.

7. A method for the production of an aqueous dispersion of a plastic pigment as claimed in any one of claims 1-6, the method comprising the steps of 1) dissolving a starting copolymer of maleic acid anhydride and a vinylaromatic monomer in an aqueous solution of NH₃ or an amine RNH₂, 2) subjecting the thus obtained mixture to an imidisation reaction, **characterised in that** the imidisation reaction is carried out at a temperature and during a reaction time which is selected such that at least 80 mole % of the maleic acid anhydride monomer units have been imidised.

8. A process as claimed in claim 7, **characterised in that** the imidisation reaction is continued until a degree of imidisation of the maleic acid anhydride/vinylaromatic monomer copolymer of at least 90 mole %, preferably virtually complete imidisation is obtained.

9. A process as claimed in claim 7 or 8, **characterised in that** the imidisation reaction is carried out in the presence of an emulsifying agent of a vinylaromatic maleimine acid anhydride copolymer or an alkali salt thereof, the emulsifier having a maleic acid content of at least 30 mole %.

10. A method as claimed in any one of claims 7-9, **characterised in that** the maleic acid anhydride/vinylaromatic monomer copolymer has a molecular weight ranging between 1000-500.000 g/mole, preferably between 10.000-300.000 g/mole, more preferably between 60.000-200.000 g/mole.

11. A method as claimed in any one of claims 7-10, **characterised in that** the molar ratio between the amine or NH₃ and the copolymer ranges between 1.2-1, but is preferably an equimolar ratio.

12. A method as claimed in any one of claims 7-9, **characterised in that** NH₃ is added in such an amount that the ratio NH₃/maleic acid anhydride in the starting copolymer is between 0.5-5:1.

13. A method as claimed in any one of claims 7-12, **characterised in that** in the course of the imidisation reaction, the reaction mixture is stirred so as to minimise adhesion of the reaction mixture to the reactor wall.

14. A method as claimed in any one of claims 7-13, **characterised in that** the imidisation reaction is carried out at a temperature above 100°C, preferably between 120-195°C, more preferably at a temperature between 160-175°C.

15. An aqueous coating composition for coating a product to be imprinted, **characterised in that** the coating composition contains an amount of the plastic pigment dispersion as claimed in any one of claims 1-6, or a plastic pigment obtained with the method of any one of claims 7-14.

16. A product having a coated surface, **characterised in that** the coating comprises an amount of the aqueous dispersion claimed in any one of claims 1-6, or an aqueous dispersion obtained with the method of any one of claims 7-14, or the dispersion of claim 15.

17. A product having a coated surface as claimed in claim 16, **characterised in that** the product is selected from the group of high gloss fine paper, light weight coated paper (LWC), mid weight coated paper and high weight coated paper, card board, thermal paper and ink jet paper.

18. Use of the aqueous dispersion claimed in any one of claims 1-6, or an aqueous dispersion obtained with the method of any one of claims 7-14, or the dispersion of claim 15 as wet end component.

19. Use of an aqueous dispersion as claimed in any one of claims 1-6, or an aqueous dispersion obtained with the method of any one of claims 7-14, or the dispersion of claim 15 for coating a surface.

20. Use as claimed in claim 16, **characterised in that** the aqueous dispersion is used as a coating for paper, a plastic film, in particular a polyethylene film, a metal foil, a textile sheet, a carton sheet.
